(19) Europäisches Patentamt
European Patent Office
Office européen des brevets

(11) **EP 0 765 921 B1**

(12) **EUROPÄISCHE PATENTSCHRIFT**

(45) Veröffentlichungstag und Bekanntmachung des Hinweises auf die Patenterteilung:
**24.09.2003 Patentblatt 2003/39**

(51) Int Cl.7: **C09D 163/00**, C08G 59/04, C08J 3/03

(21) Anmeldenummer: **96115230.3**

(22) Anmeldetag: **23.09.1996**

(54) **Emulgatorsystem für wasserverdünnbare Epoxidharzsysteme mit Topfzeit-Anzeige**

Emulsifier system for aqueous epoxy resin compositions indicating end of pot-life

Système d'agents émulsifiants pour compositions de résines époxydes aqueuses indiquant la fin de vie en pot

(84) Benannte Vertragsstaaten:
**AT BE CH DE ES FR GB IT LI NL SE**

(30) Priorität: **30.09.1995 DE 19536608**

(43) Veröffentlichungstag der Anmeldung:
**02.04.1997 Patentblatt 1997/14**

(73) Patentinhaber: **Surface Specialties Germany GmbH & Co. KG**
**65203 Wiesbaden (DE)**

(72) Erfinder:
• **Pfeil, Armin, Dr.**
  **86916 Kaufering (DE)**

• **Dreischhoff, Dieter**
  **65203 Wiesbaden (DE)**
• **Petri, Stefan**
  **65232 Taunusstein (DE)**
• **Godau, Claus**
  **65399 Kiedrich (DE)**

(74) Vertreter: **Deckers, Hellmuth, Dr.**
**Patentanwaltskanzlei Zounek,**
**Industriepark Kalle-Albert,**
**Rheingaustrasse 190-196**
**65174 Wiesbaden (DE)**

(56) Entgegenhaltungen:
**EP-A- 0 272 595     EP-A- 0 618 245**
**EP-A- 0 747 413     US-A- 4 315 044**

**Beschreibung**

Wasserverdünnbare Epoxidharzsysteme haben zunehmend unter den kalthärtenden wäßrigen Beschichtungsmitteln ("Wasserlacken") an Bedeutung gewonnen. Diese Zweikomponenten("2K")-Systeme weisen hervorragende Eigenschaften auf im Vergleich zu Einkomponenten("1K")-Wasserlacken. Hervorzuheben sind folgende positive Eigenschaften: Kein oder nur geringer Lösungsmittelanteil, nicht feuergefährlich, keine oder nur geringe Geruchsbelästigung, leichte Verarbeitbarkeit, geringe Empfindlichkeit gegenüber feuchten Untergründen, gute Trocknung und schnelle Durchhärtung, exzellente Haftung auf den meisten Substraten, sehr gute Zwischenschichthaftung, guter Korrosionsschutz bei Metallen und leichte Reinigung der Arbeitsgeräte direkt nach Gebrauch.

Im allgemeinen eignen sich als Bindemittel für wasserverdünnbare Epoxidsysteme flüssige Epoxidharze, die auch Emulgatoren enthalten können, reaktivverdünnte Harze und Festharzdispersionen. Im Falle von Flüssigharzen werden oft Gemische von Epoxidharzen auf Basis von Bisphenol A und F ("A/F-Harz-Gemische") verwendet, um die Kristallisationsneigung zu senken. Soll das Flüssigharz selbstemulgierend sein, so ist die Verwendung eines zweckmäßigerweise nichtionischen Emulgators (mit einer "hydrophilic-lipophilic balance" ("HLB") > 16) nötig, um das stark hydrophobe Epoxidharz (HLB < 1) in die wäßrige kontinuierliche Phase zu überführen.

Zum Teil kann diese Aufgabe auch durch wasserverdünnbare Härter gelöst werden, welche selber emulgierende Eigenschaften haben. Nichtmodifizierte A/F-Harz-Gemische sind nicht selbstemulgierend und nur in der Kombination mit wäßrigen Härtern wasserverdünnbar, die z.B. in der EP-A 0 000 605 beschrieben sind; solche Systeme ergeben einen sehr guten Korrosionsschutz.

Fremdemulgierte Systeme sind aus dem Stand der Technik hinreichend bekannt (z. B. DE-A 27 26 269, EP-A 0 491 550, DE-A 41 37 590). So werden z.B. reaktivverdünnte A/F-Flüssigharze in Kombination mit nichtionischen Emulgatoren eingesetzt. Diese fremdemulgierten Harze zeigen zwar insgesamt recht gute Eigenschaften, doch ist die Korrosionschutzwirkung der entsprechenden Beschichtungen durch den Gehalt an hydrophilen Emulgatoren gegenüber den zuvor genannten Systemen schlechter.

Für Epoxidharze sind spezielle Emulgatoren bekannt, welche durch Kondensation von Diglycidylverbindungen mit Polyoxyalkylendiolen erhalten werden. Diese Systeme haben sich z.B. bei der Herstellung wäßriger Epoxid-Festharzdispersionen bewährt. So beschreibt das Patent US-A 4,122,067 ein Emulgatorsystem, welches durch Kondensation von Diglycidyläthern mit Polyäthylenglykolen erhalten wird, wobei das Verhältnis der Zahl der OH-Gruppen $z(OH)$ zur Zahl der Epoxidgruppen $z(EP)$ 1:0,5 bis 1:0,833 beträgt. Somit werden hier ausschließlich OH-funktionelle Emulgatoren erfaßt. Die Patentanmeldung EP-A 0 272 595 belegt den technischen Fortschritt eines vergleichbaren Emulgatorsystems ($z(OH):z(EP)$ = 1:0,85 bis 1:3,5), wobei die Verwendung spezieller Katalysatoren bei der Kondensationsreaktion erforderlich ist. Hier werden sowohl OH-funktionelle als auch EP-funktionelle Systeme beschrieben.

Die EP-A 0 000 605 beschreibt analoge Systeme, welche ein Verhältnis von $z(OH):z(EP)$ zwischen 1:1,333 und 1:4 aufweisen, hier aber zur Hydrophilisierung von modifizierten Polyaminen eingesetzt werden, um wasserverdünnbare Epoxid-Härter zu gewinnen.

EP-A 0 618 245 beschreibt ein Emulgatorsystem auf Basis von Kondensationsprodukten aus einem aliphatischen Polyol mit einer gewichtsmittleren molaren Masse ($M_w$) von 200 bis 20000 g/mol und einer Epoxidverbindung mit mindestens zwei Epoxidgruppen pro Molekül und einem Epoxidgruppengehalt von 500 bis 10 000 mmol/kg ("Epoxidäquivalentgewicht" = molare Masse dividiert durch die mittlere Anzahl von Epoxidgruppen pro Molekül, von 100 bis 2000 g/mol), wobei das Verhältnis der Zahl der OH-Gruppen zur Zahl der EP-Gruppen $z(OH):z(EP)$ 1:3,51 bis 1: 10, vorzugsweise 1:4 bis 1:8 beträgt und der Epoxidgruppengehalt dieser Kondensationsprodukte 100 bis 7000 mmol/ kg, bevorzugt 1000 bis 4000 mmol/kg beträgt (das Epoxidäquivalentgewicht ist zwischen ca. 150 g/mol und 8000 g/ mol, bevorzugt zwischen 250 g/mol und 1000 g/mol).

Es wurde dort gefunden, daß sich diese Verbindungen mit erhöhtem Epoxidgruppengehalt, die also Epoxidfunktionalität aufweisen, hervorragend für den Einsatz als nichtionischer Emulgator in wasserverdünnbaren Epoxid-Flüssigharzsystemen eignen.

Die mit diesem Emulgatorsystem formulierten und auch alle anderen bisher bekannten wasserverdünnbaren Flüssigharze haben den wesentlichen Mangel gemeinsam, daß diese Harze in Kombination mit den meisten handelsüblichen aminofunktionellen wäßrigen Härtern das Ende der Verarbeitungszeit nicht anzeigen. Der Anwender ist jedoch von den konventionellen, d.h. lösungsmittelfreien oder -haltigen Systemen her gewohnt, daß nach Abmischen des Zweikomponentensystems eine deutliche Viskositätserhöhung gegen Ende der Verarbeitungszeit auftritt, also die sogenannte Topfzeit deutlich sichtbar angezeigt wird. Dadurch wird vermieden, daß das schon abreagierte System noch appliziert wird.

Bei wäßrigen Epoxid-Systemen gelingt es hingegen ausschließlich bei Flüssigharzen in Kombination mit einigen wenigen wäßrigen Härtern, einen Viskositätsanstieg zu beobachten, welcher rechtzeitig vor Ende der Gebrauchsdauer auftritt.

Mit Epoxidfestharzdispersionen ist es bisher nicht gelungen, das Ende der Topfzeit anzuzeigen. Auch bei den ansonsten für kalthärtende Zweikomponentensysteme hervorragend geeigneten Dispersionen, wie z.B. in DE-C 36 43 751 und in DE-A 41 28 487 beschrieben, ist die fehlende Topfzeit-Anzeige als Mangel zu sehen.

Es war daher wünschenswert, wasserverdünnbare Epoxidsysteme zur Verfügung zu stellen, welche von sich aus - also unabhängig vom verwendeten Härter - die Topfzeit anzeigen.

Überraschenderweise wird diese Aufgabe sowohl für wasserverdünnbare Epoxidflüssigharze als auch für Epoxidfestharz-Dispersionen gelöst, wenn Emulgatoren gemäß der EP-A 0 618 245 verwendet werden, wobei aber zusätzlich zumindest ein gewisser Anteil des Emulgatorsystems auf hochmolekularen aliphatischen Polyolen beruht.

Gegenstand der vorliegenden Erfindung ist ein Verfahren zur Herstellung eines Emulgators für Epoxidharze, dadurch gekennzeichnet, daß ein Umsetzungsprodukt **A1B** aus einem Polyäthylenglykol **A1** mit einer gewichtsmittleren molaren Masse von 1000 g/mol mit einer Epoxidkomponente **B** bestehend aus mindestens einer Epoxidverbindung mit mindestens zwei Epoxidgruppen pro Molekül und einem Epoxidgruppengehalt von 500 bis 10 000 mmol/kg und ein Umsetzungsprodukt **A2B** aus einem Polyäthylenglykol **A2** mit einer gewichtsmittleren molaren Masse von mindestens 4000 g/mol bis zu 20 000 g/mol mit der Epoxidkomponente **B** gemischt werden in einem Verhältnis, daß der Quotient der Masse des Polyäthylenglykols **A2** und der Summe der Massen der Komponenten **A1** und **A2** mindestens 5 % beträgt, wobei das Verhältnis der Zahl der OH-Gruppen $z(OH)$ zu der Zahl der Epoxidgruppen $z(EP)$ 1: 3,51bis 1:10 beträgt.

Bevorzugt weist ein Massenanteil (Quotient der Masse des Polyäthylenglykols **A2** und der Summe der Massen der Komponenten **A1** und **A2**) von mehr als 15 %, besonders bevorzugt von mehr als 25 % eine gewichtsmittlere molare Masse ($M_w$) von mindestens 4000 g/mol auf.

Bevorzugt beträgt das Verhältnis der Zahl der OH-Gruppen zu der der EP-Gruppen $z(OH):z(EP)$ 1:4 bis 1:8

Bei den Polyäthylenglykolen A1 und A2 handelt es sich um Polyätherpolyole (Polyoxyalkylenglykole) mit gewichtsmittleren molaren Massen ($M_w$; bestimmt durch Gelpermeationschromatographie bezogen auf Polystyrolstandard) von zwischen 200 und 20000 g/mol, insbesondere 1000 bis 10000 g/mol und OH-Zahlen (die Masse an KOH in mg, die ebensoviele Hydroxylgruppen aufweist wie 1 g des Festharzes, bezogen auf diese Masse des Festharzes) zweckmäßigerweise von 5 bis 600 mg/g, bevorzugt 10 bis 100 mg/g. Diese Polyätherpolyole besitzen vorzugsweise nur endständige, primäre OH-Gruppen.

Im Rahmen der Erfindung kann jedoch auch ein Teil dieser Polyole, bevorzugt bis zu 30 %, insbesondere bevorzugt bis zu 10 % ihrer Masse, durch überwiegend aliphatische Polyesterpolyole oder andere überwiegend aliphatische Polykondensate mit Hydroxyl-Endgruppen ersetzt werden. Beispiele für geeignete Verbindungen sind aliphatische Polyesterpolyole aus aliphatischen Dicarbonsäuren und aliphatischen Diolen, wobei bis zu 50 % der aliphatischen Dicarbonsäuren durch aromatische Dicarbonsäuren ersetzt sein können, ferner Polycarbonatpolyole, Polyamidpolyole und Polyesteramid-Polyole. Bevorzugt werden diese Verbindungen hergestellt durch Kondensation von Dicarbonsäuren mit 3 bis 40 Kohlenstoffatomen, Diolen mit zwei bis 20 Kohlenstoffatomen, primären Diaminen oder Polyalkylenpolyaminen oder Aminoalkoholen mit 2 bis 40 Kohlenstoffatomen jeweils mit den geeigneten Reaktionspartnern.

Für die vorliegende Erfindung ist es wesentlich, zur Erlangung einer Topfzeit-Anzeige durch Viskositätsanstieg Polyole (A) mit hoher molarer Masse einzusetzen, wobei die mittlere molare Masse durch Verwendung geeigneter Gemische der Kondensationsprodukte gezielt eingestellt werden kann. Es können auch geeignete Polyolgemische (A) mit der Epoxidkomponente (B) umgesetzt werden, um einheitliche Emulgatoren zu erzeugen. Diese Kondensationsprodukte können auch handelsüblichen wasserverdünnbaren Epoxidharzen zugesetzt werden, um Systeme ohne Topfzeit-Anzeige in Systeme mit Topfzeit-Anzeige umzuwandeln.

Die Epoxidverbindungen entsprechend (B) besitzen vorzugsweise einen spezifischen Epoxidgruppen-Gehalt von 500 bis 10 000 mmol/kg, insbesondere 1000 bis 6700 mmol/kg (Epoxidäquivalentgewicht von 100 bis 2000, insbesondere von 150 bis 1000 g/mol). Es handelt sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Äthergruppierungen und ähnliche.

Vorzugsweise handelt es sich bei diesen Epoxidverbindungen um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren).

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 2,2-Bis-(4-hydroxy-3-methylphenyl)-propan, 4,4'-Dihydroxydiphenyl, 4,4'-Dihydroxybenzophenon, 1,1-Bis-(4-hydroxyphenyl)-äthan, -2,2-Bis[4-(2'-Hydroxypropoxy)phenyl]-propan, 1,1-Bis-(4-hydroxyphenyl)-isobutan, 2,2-Bis-(4-hydroxy-3-tert.-butylphenyl)-propan, Bis-(2-hydroxynaphthyl)-methan, 1,5-Dihydroxynaphthalin, Tris-(4-hydroxyphenyl)-methan, Bis-(4-hydroxyphenyl)äther, Bis-(4-hydroxyphenyl)sulfon u. a. sowie die Halogenierungs- und -Hydrierungsprodukte der vorstehend genannten Verbindungen. Bisphenol A ist hierbei besonders bevorzugt.

Beispiele für mehrwertige Alkohole als Basis für die entsprechenden Polyglycidyläther sind Äthylenglykol, Diäthylenglykol, Triäthylenglykol, Polyäthylenglykole (n = 4 bis 35), 1,2-Propylenglykol, Polypropylenglykole (n = 2 bis 15), 1,3-Propylenglykol, 1,4-Butandiol, 1,5-Pentandiol, 1,6-Hexandiol, 1,2,6-Hexantriol, Glycerin, Neopentylglykol, Trimethyloläthan und Trimethylolpropan. Polypropylenglykole (n = 8 bis 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierter Linolensäure, erhält. Beispiele sind Adipinsäurediglycidylester, Phthalsäurediglycidylesterund Hexahydrophthalsäurediglycidylester.

Eine ausführliche Aufzählung geeigneter Epoxidverbindungen findet sich in dem Handbuch "Epoxidverbindungen und Epoxidharze" von A.M.Paquin, Springer Verlag, Berlin 1958, Kapitel IV und in Lee, Neville, "Handbook of Epoxy Resins", McGraw-Hill Book Co., 1967, Kapitel 2. Die genannten Epoxidverbindungen können einzeln oder im Gemisch eingesetzt werden.

Vorzugsweise wird der Emulgator durch Kondensation der genannten Polyätherpolyole (A) mit den Epoxidverbindungen (B) in Gegenwart geeigneter Katalysatoren bei 50 bis 200 °C, vorzugsweise bei 90 bis 170 °C, hergestellt, wobei das Verhältnis der Anzahl der Hydroxyl-Gruppen zur Anzahl der Epoxidgruppen 1:3,6 bis 1:10, vorzugsweise 1:4 bis 1:9, besonders bevorzugt 1:4,5 bis 1:8 und der spezifische Epoxidgruppen-Gehalt des Kondensationsproduktes 125 bis 6700 mmol/kg, bevorzugt 1000 bis 4000 mmol/kg (Epoxidäquivalentgewicht 150 g/mol bis 8000 g/mol, bevorzugt 250 g/mol bis 1000 g/mol) beträgt.

Als Katalysatoren für die Darstellung des Dispergiermittels eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumäthylat und Kaliumdodecylat sowie die Alkalisalze von Carbonsäuren, wie zum Beispiel Natriumund Lithiumstearat. Ebenfalls geeignet sind starke anorganische und organische Protonsäuren, zum Beispiel Phosphorsäure, Tetrafluorborsäure und Benzolsulfonsäure. Ferner können als Katalysatoren Lewis-Säuren verwendet werden. Als Beispiele seien Zinn(IV)chlorid, Titan(IV)chlorid, Titan(IV)isopropylat, Triäthyloxoniumtetrafluoroborat sowie Bortrifluorid und seine Komplexe, zum Beispiel mit Phosphorsäure, Essigsäure (1:1 und 1:2), Methanol, Diäthyläther, Tetrahydrofuran, Phenol, Äthylenglykolmonoäthyläther, Polyäthylenglykol (z.B mit einer molaren Masse von 200 g/mol), Dimethylsulfoxid, Di-n-Butyläther, Di-n-Hexyläther, Bernsteinsäure und aliphatische, cycloaliphatische, araliphatische Amine sowie Stickstoff-Heterocyclen genannt.

Bevorzugt werden als Katalysatoren $BF_3$-Diäthylätherat, $BF_3$-Aminkomplexe und wäßrige Tetrafluorborsäure eingesetzt. Der Massenanteil an Katalysator beträgt im allgemeinen 0,1 bis 5, vorzugsweise 0,1 bis 1 %, bezogen auf die Masse des Reaktionsgemisches. Zur besseren Dosierung kann der Katalysator in einem Lösungsmittel wie Diäthyläther, einem Glykol- oder cyclischen Äther, Ketonen und dergleichen verdünnt werden.

Zur Herstellung des Emulgators erwärmt man die umzusetzenden Gemische aus Hydroxylgruppen und Epoxidgruppen enthaltenden Verbindungen bis zu der Temperatur, bei der die Kondensation mit ausreichender Geschwindigkeit d.h. in 30 min bis 5 Stunden, abläuft. Die Umsetzung verfolgt man zweckmäßig über die Verminderung des Epoxidgruppengehaltes. Die Reaktion kann durch Kühlung unter die Reaktionstemperatur abgebrochen werden.

Durch Abmischen der so erhaltenen Emulgatoren mit Epoxid-Flüssigharzen gemäß (B) erhält man selbstemulgierende Flüssigharz-Systeme, welche mit den üblichen, vorzugsweise wasserverdünnbaren bzw. wasseremulgierbaren Aminhärtern zu Filmen mit guten Eigenschaften vernetzen. Dieses Abmischen geschieht zweckmäßigerweise bei erhöhter Temperatur, gegebenenfalls unter Vakuum, um Schaumbildung zu verhindern.

Als Epoxid-Flüssigharzkomponente haben sich insbesondere Harze auf der Basis von Bisphenol A- und Bisphenol-F-Diglycidyläthern (BADGE und BFDGE) bewährt. Die anteilsmäßige Verwendung von BFDGE erhöht die Chemikalienbeständigkeit und senkt die Kristallisationsneigung, wirkt sich allerdings nachteilig auf Kreidungsverhalten und Vergilbungsneigung aus. Der Zusatz von Massenanteilen bis zu 20 % an Reaktivverdünnern kann sinnvoll sein, um Viskosität und Gebrauchsdauer günstig zu beeinflussen.

Für die Erzeugung von Epoxidfestharzdispersionen eignen sich Epoxidharze, wie sie in DE-C 36 43 751 und in DE-A 41 28 487 ausführlich beschrieben sind. Auch können fertige Dispersionen durch entsprechende Zusätze der zuvor beschriebenen Kondensationsprodukte so modifiziert werden, daß diese Dispersionen die Topfzeit anzeigen. Diese Dispersionen lassen sich entsprechend der Lehre dieser Patente, oder beispielsweise nach der folgenden Methode herstellen:

Zunächst wird die emulgierende Komponente und darauf das Epoxidharz durch Kondensation der Epoxidverbindungen und der Polyolkomponenten in Gegenwart des Emulgators bei erhöhten Temperaturen in Gegenwart von Kondensationskatalysatoren hergestellt, anschließend wird bei tieferer Temperatur ein Reaktiv-Verdünner zugefügt, darauf gegebenenfalls ein Tensid und gegebenenfalls Lösungsmittel; schließlich wird eine wäßrige Dispersion durch portionsweises Zudosieren von Wasser erhalten.

Für Zusammensetzungen gemäß dieser Erfindung geeignete Härtungsmittel sowie die Härtungsbedingungen werden im Folgenden beschrieben. Die Härter werden allgemein in solchen Mengen eingesetzt, daß die Zahl der Epoxidgruppen $z(EP)$ und die Zahl der Aminwasserstoffatome $z(H)$ im Verhältnis von 1 : 0,75 bis 1 2,0 stehen.

Beispiele für Härtungsmittel, vorzugsweise für die Härtung bei Raumtemperatur und/oder niedrigeren Temperaturen (Aminkalthärter), sind Polyalkylenamine, wie Diäthylentriamin, Triäthylentetramin, Tetraäthylenpentamin, Pentaäthylenhexamin, ferner 2,2,4- und/oder 2,4,4-Trimethylhexamethylendiamin, Bis-(3-aminopropyl)-amin, 1,4-Bis-(3-aminopropyl)-piperazin, N,N-Bis-(3-aminopropyl)-äthylendiamin, Neopentandiamin, 2-Methyl-1,5-pentandiamin, 1,3-Diaminopentan, Hexamethylendiamin, sowie cycloaliphatische Amine wie 1,2- bzw. 1,3-Diaminocyclohexan, 1,2-Diamino-4-äthylcyclohexan, 1,4-Diamino-3,6-diäthylcyclohexan, 1-Cyclohexyl-3,4-diaminocyclohexan, Isophorondiamin und Umsetzungsprodukte davon, 4,4'-Diaminodicyclohexyl-methan und -propan, Bis(4-aminocyclohexyl)-methan und -propan, 3,3'-Dimethyl-4,4'-diaminodicyclohexylmethan 3-Amino-1-cyclohexyl-aminopropan, 1,3- und 1,4-Bis-(aminomethyl)-cyclohexan. Als araliphatische Amine werden insbesondere solche eingesetzt, bei denen aliphatische Aminogruppen vorhanden sind, z.B. meta- und para-Xylylendiamin oder deren Hydrierungsprodukte. Die genannten Amine können allein oder als Gemische verwendet werden.

Bevorzugt werden als Aminhärter neben den zuvor genannten Polyaminen wasserlösliche Polyoxyalkylendi- und -polyamine mit molaren Masse von 100 bis 2000 g/mol, z.B. die von der Firma Texaco unter dem Warenzeichen ®Jeffamine vertriebenen Produkte, sowie die leicht in Wasser dispergierbaren Härtungsmittel, wie sie in der DE-B 23 32 177 und der EP-B 0 000 605 beschrieben sind, also z.B. modifizierte Amin-Addukte, eingesetzt.

Als Härter können auch Mannich-Basen, Epoxid-Amin-Addukte oder Polyamidoamine eingesetzt werden.

Geeignete Mannich-Basen werden durch Kondensation von Polyaminen, vorzugsweise Diäthylentriamin, Triäthylentetramin, Isophorondiamin, 2,2,4-bzw. 2,4,4-Trimethylhexamethylendiamin, 1,3-und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 2,2-Bis-(4-hydroxyphenyl-)propan, vorzugsweise aber Phenol hergestellt.

Als Amin-Epoxid-Addukte kommen beispielsweise Umsetzungsprodukte von Polyaminen, wie z.B. Äthylendiamin, Propylendiamin, Hexamethylendiamin, 2,2,4- und 2,4,4-Trimethylhexamethylendiamin, meta-Xylylendiamin und/oder Bis(aminomethyl)-cyclohexan mit endständigen Mono- oder Polyepoxiden, wie z.B. Propylenoxid, Hexenoxid, Cyclohexenoxid, oder mit Glycidyläthern wie Phenylglycidyläther, tert.-Butylglycidyläther, Äthylhexylglycidyläther, Butylglycidyläther oder mit Glycidylestern, wie dem von der Firma Shell vertriebenen Glycidylester der Versaticsäure (Cardura® E) oder den unter (B) genannten Polyglycidyläthern und -estern in Betracht.

Polyamidoamine, die zur Härtung der erfindungsgemäßen Epoxidharzdispersionen verwendet werden können, werden beispielsweise durch Umsetzung von Polyaminen mit Mono- oder Polycarbonsäuren, z.B. dimerisierten Fettsäuren, erhalten.

Zur Erzielung einer schnelleren und/oder vollständigeren Durchhärtung können die aus den erfindungsgemäßen Epoxidharzdispersionen mit den genannten Aminhärtern erhältlichen Beschichtungen auch 15 bis 120 Minuten auf 50 bis 120 °C erhitzt werden.

Die erfindungsgemäßen Flüssigharzsysteme finden Anwendung vor allem als Schutzanstrich für mineralische Untergründe, d.h. auf Putz, Beton, Mauerwerk, Zement. Beschichtet werden beispielsweise Wände, Decken und Böden in Garagen, Großküchen, Krankenhäusern, Molkereien, Badeanstalten, Tunnelanlagen und Kernkraftwerken. Bei entsprechender Formulierung können die erfindungsgemäßen Systeme auch als Korrosionsschutzprimer auf Stahluntergründen verwendet werden. Auch der Einsatz als hochglänzende Klarlacke für die verschiedensten Substrate, wie z. B. Holz, ist möglich.

Aufgrund ihrer hervorragenden technologischen Eigenschaften, wie z.B. ausgezeichnete Haftung, sehr hohe Härte, gute korrosionsschutzwirkung, Wasser- und Chemikalienbeständigkeit, eignen sich die erfindungsgemäß gewonnenen Dispersionen in Kombination mit geeigneten Härtungsmitteln und Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyäthylen, Polypropylen usw.), Kompositwerkstoffen, Keramik und vorbehandelten oder nicht vorbehandelten Metallen verwendet werden.

Die folgenden Beispiele sollen die Erfindung erläutern, ohne durch ihre Auswahl einschränkend zu wirken:

**Beispiele:**

**I. Emulgatoren auf Basis Polyäthylenglykol**

**I.1 Allgemeine Arbeitsvorschrift:**

1 mol Epoxidkomponente (B) (Stoffmenge an Epoxidgruppen $n$(EP) = 2 mol, Diepoxid) wird mit der entsprechenden Menge Polyäthylenglykol in einer Stickstoffatmosphäre auf 125 °C geheizt. Unter gutem Rühren gibt man 1,5 g eines $BF_3$-Aminkomplexes als Katalysator zu (®Ahcor 1040 der Firma Air Products) und erhöht die Temperatur kontinuierlich auf 150 °C. Der spezifische (bezogen auf die Masse $m$ der Mischung) Epoxidgruppengehalt $n$(EP)/$m$ sinkt dabei etwas unter den theoretischen Wert ab.

**I.2 Emulgatoren auf Basis Bisphenol A-Diglycidyläther**

| | $M_w$ (REG) | $z$(EP) : $z$ (OH) | $n$(EP)/$m$ theor. | $EV$ theor. | $n$(EP)/$m$ Abbruch | $EV$ Abbruch | **Temp.** Abbruch | **Dauer** |
|---|---|---|---|---|---|---|---|---|
| Nummer | g / mol | | mmol/kg | g/mol | mmol/kg | g/mol | °C | h |
| Emu-1 | 4000 | 4,3 | 1181 | 847 | | | 155 | 4 |
| Emu-2 | 6000 | 4,3 | 870 | 1150 | 669 | 1495 | 150 | 2,5 |
| Emu-3 | 8000 | 4,3 | 688 | 1453 | 625 | 1600 | 140 | 4 |
| Emu-4 | 10000 | 4,3 | 569 | 1756 | 490 | 2040 | 160 | 4 |
| Emu-V | 1000 | 4,3 | 2597 | 385 | 2381 | 420 | 160 | 3 |
| PEG: Polyäthylenglykol<br>EV: EV-Wert, Epoxidäquivalentgewicht, d.i. Masse der Substanz, geteilt durch die Stoffmenge der Epoxidgruppen<br>Emu-V: Vergleichsbeispiel aus EP-A 0 618 245 (Beispiel I.4) | | | | | | | | |

Formel für theoretischen EV-Wert:

$$EV = \frac{M_W(\text{PEG}) + 2 * 185\text{g/mol} * z(\text{EP}): z(\text{OH})}{2 * (z(\text{EP}):z(\text{OH}) -1)}$$

Formel für theoretischen spezifischen Epoxidgruppengehalt ($SEG$):

$$SEG = \frac{n(\text{EP})}{m} = \frac{2 *(z(\text{EP}):z(\text{OH})-1}{M_W(\text{PEG}) + 2 * 185\text{ g/mol} * z(\text{EP}):z(\text{OH})}$$

**II. Flüssigharzgemische**

Die folgenden Beispiele zeigen, wie durch Zugabe geringer Mengen von epoxyfunktionellen Emulgatoren auf Basis hochmolekularer Polyäthylenglykole zu einem wasserverdünnbaren Flüssigharz gemäß EP-A 0 618 245 Systeme mit Topfzeit-Anzeige gewonnen werden können:

**II.1 Allgemeine Formulierung**

175 g Diglycidyläther von Bisphenol F mit einem spezifischen Epoxidgruppengehalt von 5710 bis 6060 mmol/kg (EV-Wert von 165 bis 175 g/mol, BFDGE, Beckopox SEP 106) und 325 g Diglycidyläther von Bisphenol A mit einem spezifischen Epoxidgruppengehalt von 5405 bis 5555 mmol/kg (EV-Wert von 180 bis 185 g/mol, Beckopox EP 140) werden bei Raumtemperatur homogenisiert. Zu der homogenen Mischung gibt man 68,2 g des Emulgators Emu-V (12% bezogen auf die Gesamtmasse): Vergleichsmuster FIH-V. Zu dieser Mischung werden jeweils Massenanteile von 4 % der verschiedenen Emulgatoren gegeben. Man homogenisiert bei 70 °C während zwei Stunden unter Stickstoff.

**II.2 Flüssigharze**

|  | Emulgator | | Emulgator 2 | | $n$(EP)/$m$ | EV | Viskosität |
|---|---|---|---|---|---|---|---|
| Nummer | Typ | % | Typ | % | mmol / kg | g / mol | mPa·s |
| FIH-1 | Emu-V | 11,25 | Emu-1 | 3,75 | 5051 | 198 | 6500 |
| FIH-2 | Emu-V | 11,25 | Emu-2 | 3,75 | 5051 | 198 | 6400 |
| FIH-3 | Emu-V | 11,25 | Emu-3 | 3,75 | 5102 | 196 | 4800 |
| FIH-4 | Emu-V | 11,25 | Emu-4 | 3,75 | 5076 | 197 | 6400 |
| FIH-V | Emu-V | 12 | - | - | 5128 | 195 | 8500 |
| Emulgatorgehalt bezogen auf Gesamtmasse<br>FIH = Flüssig-Harz<br>FIH-V: Vergleichsbeispiel aus EP-A 0 618 245 | | | | | | | |

**11.3 Anwendungstechnische Ausprüfung**

Bei der Formulierung des 2K-Systems wird eine leichte Übervernetzung (1,25 mol Vernetzer pro 1 mol Epoxidgruppen) gewählt und die Gesamtmischung mit Wasser auf Prüfviskosität gebracht.

Die erfindungsgemäßen Flüssigharze weisen wie der Vergleich eine kurze Trocknungszeit (staubtrocken), gute Wasserfestigkeit und hohe Anfangshärte auf. Durchweg guter Verlauf und Film in Kombination mit z.T. deutlich erhöhter Härte runden das gute Eigenschaftsbild ab. Aber nur die Flüssigharze mit Zusätzen an Emulgatoren auf Basis hochmolekularer Polyäthylenglykole zeigen einen deutlichen Viskositätsanstieg zum Ende der Gebrauchsdauer an.

**Erläuterung der Prüfungsbedingungen:**

**1. Staubtrocken:** Auf den Film gestreute Glasperlen lassen sich nach der Aushärtung nicht mehr mit einem Pinsel entfernen.

**2. Klebfrei:** Die Glasperlen lassen sich nach der Aushärtung mit einem Pinsel entfernen.

**3. Pendelhärte nach König:** DIN 53 157.

**4. Filmtrübung:** Nach dem Mischen von Härter und Dispersion werden halbstündlich Filme mit einer Naßfilmdicke von 200 μm aufgezogen. Das Auftreten einer Trübung im Film nach Aushärtung zeigt das Ende der Verarbeitungszeit an und wird als Prüfergebnis eingetragen.

**5. Wasserbeständigkeit nach 24 h, Lagerung bei Raumtemperatur:** Auf Glasplatten mit 200 μm Naßfilmdicke aufgezogene Filme werden nach 24 h Lagerung in Wasser bei Raumtemperatur geprüft.

**II.3.1 Mit Beckopox VEH 2133w**

Es handelt sich um einen reaktiven Härter auf der Basis hydrophiler Epoxid-Polyamin-Addukte, 80 % in Wasser (Hoechst).

| Flüssigharz | | Erfindungsgemäße Flüssigharze | | | | Vergleich |
|---|---|---|---|---|---|---|
| | | 1 | 2 | 3 | 4 | v |
| Menge Harz 70%ig | g | 100 | 100 | 100 | 100 | 100 |
| Menge Härter 40%ig | g | 104,6 | 104,6 | 106,5 | 105,1 | 107,3 |
| Verarbeitungszeit | h:min | 1:40 | 1:30 | 1:30 | 1:30 | 1:50 |
| Topfzeitanzeige | h:min | 1:40 | 1:30 | 1:30 | 1:30 | keine |
| Trocknung staubtr. | h:min | 2:00 | 2:00 | 1:50 | 1:50 | 3:20 |
| Trocknung klebfrei | h:min | 6:50 | 7:00 | 7:15 | 7:00 | > 8h, < 24 h |
| Verlauf | * | 0 | 0 | 0 | 0 | 0 |
| Filmtransparenz | * | 0 | 0 | 0 | 0 | 0 |
| Oberflächenkleber | * | 0 | 0 | 0 | 0 | 0 |
| Pendelhärte n. 1 d | s | 168 | 178 | 187 | 192 | 86 |
| Pendelhärte n. 2 d | s | 191 | 192 | 203 | 212 | 117 |
| Pendelhärte n. 7 d | s | 223 | 224 | 225 | 227 | 167 |
| Wasserf. nach 24 h | * | 0 | 0 | 0 | 0 | 0-1 |
| Heißwasserf. n. 7 d | * | 0 | 0 | 0 | 0 | 1-2 |
| Pendelhärte n. Wasserf. | s | 152 | 170 | 167 | 174 | 98 |
| Pendelhärte im Dampfraum | s | 182 | 179 | 173 | 193 | 84 |
| Emulsionsstabilität | | > 3 Wochen | > 3 Wochen | > 3 Wochen | > 3 Wochen | < 1 Woche |

* Skala: 0 = exzellent bis 5 = schlecht

## II.3.2 Mit Beckopox VEH 2849w

Es handelt sich um einen Härter auf der Basis hydrophiler Epoxid-Polyamin-Addukte, 80 % in Wasser (Hoechst).

| | | Erfindungsgemäße Flüssigharze | | | | Vergleich |
|---|---|---|---|---|---|---|
| Flüssigharz | | 1 | 2 | 3 | 4 | V |
| Menge Harz 70%ig | g | 100 | 100 | 100 | 100 | 100 |
| Menge Härter 40%ig | g | 95,6 | 95,6 | 97,6 | 96,1 | 98,0 |
| Verarbeitungszeit | h:min | 0:50 | 0:50 | 0:40 | 0:40 | 0:40 |
| Topfzeitanzeige | h:min | 0:50 | 0:50 | 0:40 | 0:40 | keine |
| Trocknung staubtr. | h:min | 0:30 | 0:30 | 0:30 | 0:30 | 0:30 |
| Trocknung klebfrei | h:min | 6:00 | 6:00 | 6:00 | 6:00 | 6:00 |
| Verlauf | * | 1 | 1 | 1 | 1 | 1 |
| Filmtransparenz | * | 0-1 | 0 | 0-1 | 0-1 | 0-1 |
| Oberflächenkleber | * | 0 | 0 | 0 | 0 | 0 |
| Pendelhärte n. 1 d | s | 145 | 149 | 138 | 147 | 123 |
| Pendelhärte n. 2 d | s | 178 | 189 | 179 | 177 | 171 |
| Pendelhärte n. 7 d | s | 210 | 215 | 206 | 210 | 212 |
| Wasserf. nach 24 h | * | 0-1 | 0-1 | 0-1 | 0-1 | 1 |
| Heißwasserf. n. 7 d | * | 0-1 | 0 | 0-1 | 0-1 | 0-1 |
| Pendelh. n. Wasserf. | s | 161 | 174 | 162 | 162 | 117 |
| Pendelh. im Dampfraum | s | 173 | 182 | 168 | 177 | 170 |

* Skala: 0 = exzellent bis 5 = schlecht

EP 0 765 921 B1

II.3.3 Mit Beckopox EH 623w

Es handelt sich um einen Härter auf der Basis hydrophiler Epoxid-Polyamin-Addukte, 80 % in Wasser (Hoechst).

| | | Erfindungsgemäße Flüssigharze | | | | Vergleich |
|---|---|---|---|---|---|---|
| Flüssigharz | | 1 | 2 | 3 | 4 | V |
| Menge Harz 70%ig | g | 100 | 100 | 100 | 100 | 100 |
| Menge Härter 40%ig | g | 144,3 | 144,3 | 146,8 | 145,0 | 148,0 |
| Verarbeitungszeit | h:min | 4:45 | 4:50 | 4:50 | 4:40 | 3:30 |
| Topfzeitanzeige | h:min | schwach | 4:50 | schwach | schwach | keine |
| Trocknung staubtr. | h:min | 6:50 | 6:50 | 8 - 24 h | 8 - 24 h | 7:00 |
| Trocknung klebfrei | h:min | 8 - 24 h | 8 - 24 h | 8 - 24 h | 8 - 24 h | 8 - 24 h |
| Verlauf | * | 1 | 1 | 1 | 1 | 1 |
| Filmtransparenz | * | 0 | 0 | 0 | 0 | 0 |
| Oberflächenkleber | * | 0 | 0 | 0 | 0 | 0 |
| Pendelhärte n. 1 d | s | 58 | 57 | 49 | 15 | 55 |
| Pendelhärte n. 2 d | s | 101 | 100 | 47 | 45 | 94 |
| Pendelhärte n. 7 d | s | 173 | 179 | 124 | 117 | 184 |
| Wasserf. nach 24 h | * | 0 | 0 | 3-4 | 4 | 0-1 |
| Heißwasserf. n. 7 d | * | 0 | 0 | 0-1 | 0-1 | 0 |
| Pendelh. n. Wasserf. | s | 119 | 119 | 67 | 65 | 73 |
| Pendelh. im Dampfraum | s | 83 | 73 | 44 | 39 | 60 |

* Skala: 0 = exzellent bis 5 = schlecht

Klarlacke auf Basis des Flüssigharzes 2 und des Vergleichs mit EH 623w wurden in einem weiteren Test auf Spritzviskosität (DIN-4: 20 bis 40 s Ausflußzeit) eingestellt und sowohl Glanz als auch Viskosität als Funktion der Zeit gemessen:

Beim erfindungsgemäßen Flüssigharz 2 trat bis zum ersten beobachtbaren Glanzabfall der Filme eine Verdreifachung der Viskosität auf (nach 4 Stunden), nach 24 Stunden war der Lack vollständig geliert.

Der Vergleich fällt jedoch während der ersten 3 Stunden nach Abmischen auf ca. 20 % der ursprünglichen Viskosität ab, um dann bei einem konstanten Wert zu bleiben.

Somit zeigen die erfindungsgemäßen Flüssigharze auch unter unter praxisnahen Bedingungen eine den konventionellen Systemen vergleichbare Topfzeit-Anzeige.

### III. Festharzdispersionen

### III.1 Herstellung

Die Herstellung wird in der Anmeldung EP-A 0 530 602 ausführlich beschrieben.

Gemäß dieser Anmeldung wird als Vergleichsmuster die Dispersion FHD-V erzeugt. Diese enthält einen hochmolekularen Emulgator aus Bisphenol A-Diglycidyläther und Polyäthylenglykol 4000 (molare Masse ca. 4000 g/mol) ohne Epoxidgruppen.

Eine erfindungsgemäße Dispersion wird auf exakt die gleiche Weise hergestellt, jedoch wird der o.g. Emulgator gegen den Emulgator Emu-1 (siehe I.2) ausgetauscht. Die so gewonnene Dispersion FHD-1 weist gleichen Festkörper-Massenanteil (55 %), gleiche Viskosität (ca. 1500 mPa·s) und gleiche Teilchengröße (ca. 600 nm) auf wie das Vergleichsmuster.

### III.2 Anwendungstechnische Ausprüfung

Härter: Beckopox® VEH 2133w der Firma Hoechst.

| Festharz | | Erf.gemäß | Vergleich |
|---|---|---|---|
| **Flüssigharz** | | **FHD-1** | **FHD-V** |
| Menge Dispersion | g | 100 | 100 |
| Menge Härter 40%ig | g | 33 | 32 |
| Verarbeitungszeit | h:min | 1:50 | 1:40 |
| **Topfzeitanzeige** | h:min | **1:50** | **keine** |
| Trocknung staubtr. | h:min | 1:00 | 0:40 |
| Trocknung klebfrei | h:min | 5:30 | 5:00 |
| Verlauf | * | 0 | 0 |
| Filmtransparenz | * | 0 | 0 |
| Oberflächenkleber | * | 0 | 0 |
| Pendelhärte n. 1 d | s | 90 | 101 |
| Pendelhärte n. 2 d | s | 102 | 119 |
| Pendelhärte n. 7 d | s | 132 | 157 |
| Wasserf. nach 24 h | * | 1-2 | 1-2 |
| Pendelh. n. Wasserf. | s | 124 | 123 |
| Pendelh. im Dampfraum | s | 93 | 104 |

\* Skala: 0 = exzellent bis 5 = schlecht

### Patentansprüche

1. Verfahren zur Herstellung eines Emulgators für Epoxidharze, **dadurch gekennzeichnet, daß** ein Umsetzungsprodukt **A1B** aus einem Polyäthylenglykol **A1** mit einer gewichtsmittleren molaren Masse von 1000 g/mol mit einer Epoxidkomponente **B** bestehend aus mindestens einer Epoxidverbindung mit mindestens zwei Epoxidgruppen pro Molekül und einem Epoxidgruppengehalt von 500 bis 10 000 mmol/kg und ein Umsetzungsprodukt **A2B** aus einem Polyäthylenglykol **A2** mit einer gewichtsmittleren molaren Masse von mindestens 4000 g/mol bis zu 20 000 g/mol mit der Epoxidkomponente **B** gemischt werden in einem Verhältnis, daß der Quotient der Masse des Polyäthylenglykols **A2** und der Summe der Massen der Komponenten **A1** und **A2** mindestens 5 % beträgt, wobei das Verhältnis der Zahl der OH-Gruppen z(OH) zu der Zahl der Epoxidgruppen z(EP) 1: 3,51 bis 1:10 beträgt.

2. Verfahren nach Anspruch 1, **dadurch gekennzeichnet, daß** der Quotient der Masse des Polyäthylenglykols **A2** und der Summe der Massen der Komponenten **A1** und **A2** mehr als 15 % beträgt.

3. Verfahren nach Anspruch 1, **dadurch gekennzeichnet, daß** der Quotient der Masse des Polyäthylenglykols **A2** und der Summe der Massen der Komponenten **A1** und **A2** mehr als 25 % beträgt.

4. Verfahren nach Anspruch 1, **dadurch gekennzeichnet, daß** das Verhältnis der Zahl der Hydroxyl-Gruppen z(OH) zu der Zahl der Epoxid-Gruppen z(EP) 1:4 bis 1:8 beträgt.

5. Verfahren nach Anspruch 1, **dadurch gekennzeichnet, daß A1** und **A2** eine OH-Zahl von 5 bis 600 mg/g aufweisen.

6. Verfahren nach Anspruch 1, **dadurch gekennzeichnet, daß A1** und **A2** ausschließlich endständige primäre Hydroxylgruppen aufweisen.

7. Verfahren nach Anspruch 1, **dadurch gekennzeichnet, daß** in **A1** und/oder **A2** ein Massenanteil bis zu 30 % von einem oder mehreren Polyesterpolyolen aus Polycarbonsäuren und Polyhydroxyverbindungen enthalten ist.

8. Verfahren nach Anspruch 7, **dadurch gekennzeichnet, daß** in den Polyesterpolyolen bis zu 50 % der Masse der Polycarbonsäuren aromatische Polycarbonsäuren sind.

9. Verfahren nach Anspruch 1, **dadurch gekennzeichnet, daß** in **A1** und/oder **A2** ein Massenanteil von bis zu 30 % an Polycarbonat-Polyolen, Polyamid-Polyolen oder Polyesteramid-Polyolen enthalten ist.

10. Verfahren zur Herstellung von selbstemulgierenden Epoxid-Flüssigharz-Systemen, **dadurch gekennzeichnet, daß** Emulgatoren gemäß Anspruch 1 hergestellt und anschließend mit Epoxid-Flüssigharzen gemischt werden.

11. Verfahren zur Herstellung von Epoxid-Festharz-Dispersionen, **dadurch gekennzeichnet, daß** Emulgatoren gemäß Anspruch 1 hergestellt werden, in Gegenwart dieser Emulgatoren ein Epoxidharz durch Kondensation von Epoxidverbindungen und Polyolverbindungen bei erhöhten Temperaturen in Gegenwart von Kondensationskatalysatoren synthetisiert wird, bei tieferer Temperatur ein Reaktivverdünner hinzugefügt wird und schließlich durch portionsweises Zudosieren von Wasser eine wäßrige Dispersion hergestellt wird.

12. Verfahren nach Anspruch 11, **dadurch gekennzeichnet, daß** Massenanteile von bis zu 20 % an Reaktivverdünnern, bezogen auf die Masse an Festkörper, zugesetzt werden.

**Claims**

1. A process for preparing an emulsifier for epoxy resins, which comprises mixing a reaction product A1B of a polyethylene glycol A1 having a weight-average molar mass of 1000 g/mol with an epoxide component B consisting of at least one epoxide compound having at least two epoxide groups per molecule and an epoxide group content of from 500 to 10,000 mmol/kg and a reaction product A2B of a polyethylene glycol A2 having a weight-average molar mass of at least 4000 g/mol up to 20,000 g/mol with the epoxide component B in a proportion such that the ratio of the mass of the polyethylene glycol A2 to the sum of the masses of components A1 and A2 is at least 5%, the ratio of the number of OH groups z(OH) to the number of epoxide groups z(EP) being from 1:3.51 to 1:10.

2. The process as claimed in claim 1, wherein the ratio of the mass of the polyethylene glycol A2 to the sum of the masses of components A1 and A2 is more than 15%.

3. The process as claimed in claim 1, wherein the ratio of the mass of the polyethylene glycol A2 to the sum of the masses of components A1 and A2 is more than 25%.

4.  The process as claimed in claim 1, wherein the ratio of the number of hydroxyl groups z(OH) to that of the epoxide groups z(EP) is from 1:4 to 1:8.

5.  The process as claimed in claim 1, wherein A1 and A2 have an OH number of from 5 to 600 mg/g.

6.  The process as claimed in claim 1, wherein A1 and A2 have exclusively terminal primary hydroxyl groups.

7.  The process as claimed in claim 1, wherein A1 and/or A2 include a mass fraction of up to 30% of one or more polyesterpolyols of polycarboxylic acids and polyhydroxy compounds.

8.  The process as claimed in claim 7, wherein up to 50% of the mass of the polycarboxylic acids in the polyesterpolyols are aromatic polycarboxylic acids.

9.  The process as claimed in claim 1, wherein A1 and/or A2 include a proportion by mass of up to 30% of polycarbonatepolyols, polyamidepolyols or polyesteramidepolyols.

10. A process for producing self-emulsifying liquid epoxy resin systems, which comprises preparing emulsifiers as set forth in claim 1 and then mixing them with liquid epoxy resins.

11. A process for producing dispersions of solid epoxy resins, which comprises preparing emulsifiers as set forth in claim 1, synthesizing an epoxy resin in the presence of these emulsifiers by condensing epoxide compounds and polyol compounds at elevated temperatures in the presence of condensation catalysts, adding a reactive diluent at a lower temperature, and finally preparing an aqueous dispersion by portionwise metered addition of water.

12. The process as claimed in claim 11, wherein mass fractions of up to 20% of reactive diluents, based on the mass of solids, are added.


**Revendications**

1.  Procédé pour la préparation d'un agent émulsionnant pour des résines époxyde, **caractérisé en ce qu'**on mélange un produit de réaction **A1B** d'un polyéthylèneglycol **A1** avec une masse molaire moyenne en masse de 1000 g/mol avec un composant époxyde **B** constitué d'au moins un composé époxyde avec au moins deux groupes époxyde par molécule et une teneur en groupes époxyde de 500 à 10 000 mmol/kg et un produit de réaction **A2B** d'un polyéthylèneglycol **A2** avec une masse molaire moyenne en masse d'au moins 4000 g/mol jusqu'à 20 000 g/mol avec le composant époxyde **B** dans un rapport, tel que le quotient de la masse du polyéthylèneglycol **A2** et de la somme des masses des composants **A1** et **A2** s'élève à au moins 5 %, le rapport du nombre de groupes OH n(OH) sur le nombre de groupes époxyde n(EP) étant compris entre 1 : 3,51 et 1 : 10.

2.  Procédé selon la revendication 1, **caractérisé en ce que** le quotient de la masse du polyéthylèneglycol **A2** et de la somme des masses des composants **A1** et **A2** est de plus de 15 %.

3.  Procédé selon la revendication 1, **caractérisé en ce que** le quotient de la masse du polyéthylèneglycol **A2** et de la somme des masses des composants **A1** et **A2** est de plus de 25 %.

4.  Procédé selon la revendication 1, **caractérisé en ce que** le rapport du nombre de groupes hydroxyle n(OH) au nombre de groupes époxyde n(EP) est compris entre 1 : 4 et 1 : 8.

5.  Procédé selon la revendication 1, **caractérisé en ce que A1** et **A2** présentent un indice OH de 5 à 600 mg/g.

6.  Procédé selon la revendication 1, **caractérisé en ce que A1** et **A2** présentent exclusivement des groupes hydroxyle primaire terminaux.

7.  Procédé selon la revendication 1, **caractérisé en ce que A1** et/ou **A2** contiennent une proportion en masse allant jusqu'à 30 % d'un ou de plusieurs polyesterpolyols d'acides polycarboxyliques et de composés polyhydroxylés.

8.  Procédé selon la revendication 7, **caractérisé en ce que** dans les polyesterpolyols jusqu'à 50 % de la masse des acides polycarboxyliques sont des acides polycarboxyliques aromatiques.

9. Procédé selon la revendication 1, **caractérisé en ce que A1** et/ou **A2** contiennent une proportion en masse allant jusqu'à 30 % d'un ou de plusieurs polycarbonatepolyols, polyamide-polyols ou polyesteramide-polyols.

10. Procédé pour la préparation de systèmes de résine époxyde liquide autoémulsionnnables, **caractérisé en ce qu'**on prépare des agents émulsionnants selon la revendication 1 et on les mélange ensuite avec des résines époxyde liquides.

11. Procédé pour la préparation de dispersions de résine époxyde solide, **caractérisé en ce qu'**on prépare des agents émulsionnants selon la revendication 1, on synthétise en présence de ces agents émulsionnants une résine époxyde par condensation de composés époxyde et de composés polyol à température élevée en présence de catalyseurs de condensation, on ajoute à température plus basse un diluant réactif et enfin on prépare une dispersion aqueuse par ajout d'eau par portions.

12. Procédé selon la revendication 11, **caractérisé en ce qu'**on ajoute des proportions en masse de jusqu'à 20 % de diluants réactifs, par rapport à la masse de corps solide.